Europäisches Patentamt

European Patent Office

Office européen des brevets

(19)

(11) Numéro de publication: **0 270 443**
**B1**

(12) **FASCICULE DE BREVET EUROPEEN**

(45) Date de publication du fascicule du brevet:
**24.01.90**

(21) Numéro de dépôt: **87402606.5**

(22) Date de dépôt: **19.11.87**

(51) Int. Cl.⁴: **F02C 7/277**
**// F16K31/00**

(54) Dispositif de commande d'une vanne de démarrage de turbomachine d'aviation.

(30) Priorité: **20.11.86 FR 8616137**

(43) Date de publication de la demande:
**08.06.88 Bulletin 88/23**

(45) Mention de la délivrance du brevet:
**24.01.90 Bulletin 90/4**

(84) Etats contractants désignés:
**DE FR GB IT**

(56) Documents cités:
**DE-A- 3 600 244**
**GB-A- 797 025**
**GB-A- 2 172 093**
**US-A- 2 873 577**

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75015 Paris(FR)**

(72) Inventeur: **Mouton, Pierre Charles, 19, rue de la Mare Aux Moines, F-91350 Grigny(FR)**

(74) Mandataire: **Moinat, François et al, S.N.E.C.M.A. Service des Brevets Boite Postale 81, F-91003 Evry Cédex(FR)**

## Description

La présente invention concerne les moyens de commande des démarreurs de turbomachines.

Les démarreurs à air de turbomachines, notamment des turboréacteurs d'aviation, comprennent une turbine entraînée par un générateur auxiliaire d'air comprimé, un réducteur et un système d'embrayage.

Le système d'embrayage peut prendre deux configurations et être soit du type à "roue libre" (roue dentée et cliquet), soit du type à "lanceur à inertie" (crabots ou dents de loup) et dans les deux cas, la mise en action du démarreur est effectuée par commande en ouverture d'une vanne-papillon placée dans le circuit d'alimentation en air comprimé pour alimenter la turbine de commande du démarreur.

Or, suivant le type d'embrayage utilisé dans le démarreur, les caractéristiques demandées pour l'ouverture de la vanne de démarreur peuvent être opposées.

Le système à roue libre demande que l'accélération du démarreur, lors de l'ouverture de la vanne de démarrage, reste dans des limites déterminées de manière à minimiser les impacts à l'embrayage, particulièrement lorsque le moteur tourne déjà (autorotation).

D'un autre côté le système à inertie demande un taux d'accélération supérieur à un minimum de manière à lancer d'une façon positive le système de crabotage entre le démarreur et le moteur.

Or, les démarreurs étant fabriqués par des équipementiers différents et pouvant être montés indifféremment sur un même moteur selon le choix du client, les motoristes cherchent à réaliser des vannes de démarrage capables d'être utilisées avec les deux types de démarreurs précités.

Cependant les vannes de démarrage classiques répondent très mal aux impératifs opposés indiqués ci-dessus et rendent difficile l'emploi d'une vanne commune aux deux types de démarreurs.

En effet les vannes de démarrage classiques utilisent un effet de restriction dans l'alimentation ou la vidange du vérin de commande de la vanne papillon qui est tel que, lors des premiers degrés d'ouverture, le faible gain "section/angle d'ouverture" de la vanne papillon fait que le taux de montée en pression à l'entrée de la turbine du démarreur reste faible, conduisant à une accélération faible du démarreur. Si cet effet de restriction est éliminé de manière à permettre un bon fonctionnement des lanceurs à inertie, l'emploi d'une telle vanne sur le démarreur à roue libre excédera les capacités d'impact de l'embrayage en raison de l'accélération trop forte qu'il induira sur le réducteur dans le cas de l'autorotation.

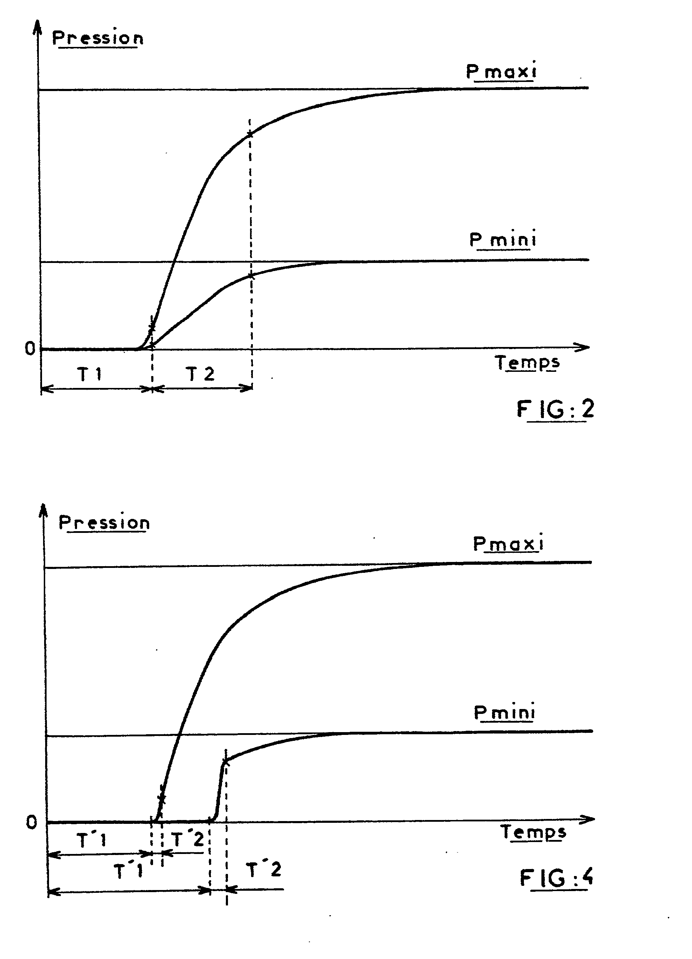

On doit également noter que ces caractéristiques opposées se voient aggravées par le fait que la pression d'alimentation provenant du générateur auxiliaire d'air comprimé en amont de la vanne de démarrage peut varier dans un rapport de 3 à 1 ainsi que le montre la figure 2 où l'on a représenté des courbes caractéristiques de montée en pression d'alimentation en fonction du temps pour des vannes classiques de démarrage.

Le but de la présente invention est de réaliser une vanne de démarrage qui soit apte à être utilisée avec les deux types de démarreurs précités et qui, pour ce faire, permette d'obtenir une accélération non excessive à haute pression tout en fournissant dans les premiers degrés d'ouverture du papillon une accélération suffisante même à faible pression.

L'invention a donc pour objet un dispositif de commande d'une vanne papillon de démarrage d'une turbomachine d'aviation, la vanne papillon étant portée par un axe dont la rotation est commandée par la translation d'un tiroir de commande se déplaçant dans un cylindre sous l'action d'une différence de pression entre au moins deux chambres du cylindre, tel qu'il comporte un dispositif élastique de retenue momentanée du tiroir pour en empêcher le déplacement tant qu'une différence de pression minimale prédéterminée ne s'est pas créée entre les deux chambres, le tiroir se déplaçant à grande vitesse dès que la différence de pression minimale est atteinte et pendant la durée de la recompression de la chambre en dépression, et qu'il comporte en combinaison un moyen pour limiter la vitesse maximale de déplacement du tiroir après la recompression.

Selon une particularité de l'invention le tiroir de commande comporte à une de ses extrémités un premier piston de grande section définissant avec le fond du cylindre une chambre de commande et à son autre extrémité un second piston de plus faible diamètre définissant avec le premier piston et le cylindre une chambre centrale alimentée en air par une écope disposée sur le circuit d'alimentation en air comprimé de la vanne. La chambre de commande peut alors être mise en communication par un électrorobinet, soit avec la chambre centrale pour sa mise en pression initiale, soit avec la pression atmosphérique. pour sa mise en dépression.

Selon un mode de réalisation, le dispositif élastique de retenue momentanée du tiroir peut être constitué par une tige externe, solidaire du tiroir, comportant une excroissance à deux portées tronconiques coopérant avec un élément élastique porté par le support fixe du cylindre.

Selon un autre mode de réalisation, an dispositif de retenue élastique on peut substituer un dispositif de retenue, constitué par un aimant coopérant avec une partie métallique du tiroir.

D'autres caractéristiques et des variantes d'exécution seront montrées en regard des figures annexées parmi lesquelles

- la figure 1 est une vue schématique d'un démarreur et de son circuit de commande ;
- la figure 2 est un graphe donnant les évolutions maxi et mini de la pression d'alimentation d'un démarreur selon l'état de la technique connu en fonction du temps ;
- la figure 3 est une vue en coupe du dispositif de commande selon l'invention ;
- la figure 4 est un graphe similaire à la figure 2 indiquant les évolutions caractéristiques de la pression d'alimentation d'un démarreur actionné par le dispositif selon l'invention en fonction du temps.

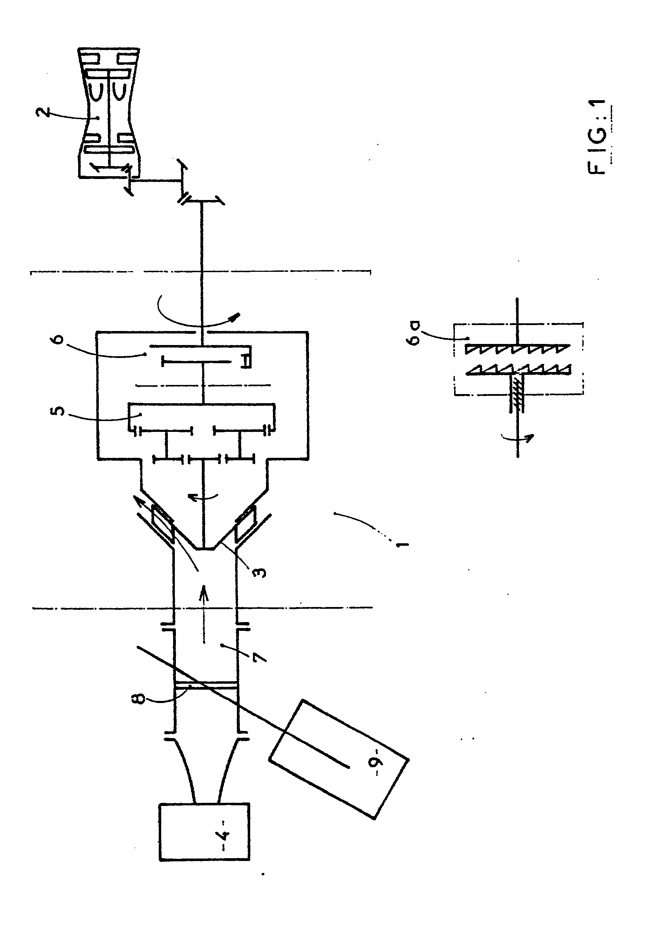

En référence à la figure 1, on a représenté schématiquement un démarreur 1 d'une turbomachine 2. Le démarreur comporte une turbine 3 entraînée par de l'air prélevé soit sur un générateur d'air comprimé 4, soit sur un autre turboréacteur déjà en fonctionnement. La turbine 3 entraîne un réducteur épicycloïdal 5 dont la sortie est reliée à l'organe d'embrayage 6 qui peut être une roue libre à roue dentée et cliquets ou une roue à lancement par inertie avec dents de loup 6a. La mise en pression du conduit d'amenée d'air 7 vers la turbine 3 s'effectue au moyen d'une vanne papillon 8 dont la rotation est assurée par un dispositif de commande 9. Dans l'état actuel de la technique, on utilise des dispositifs 9 de commande de vanne différents selon le type du démarreur : l'une à ouverture rapide pour le démarreur à embrayage à inertie, l'autre à ouverture lente pour le démarreur à embrayage à roue libre.

Ce dernier a une courbe de montée en pression du type montré à la figure 2. Au départ, la pression d'alimentation du démarreur croît lentement pendant une période T1 puis plus rapidement pendant T2 et enfin tend vers une valeur maximale constante de moins en moins rapidement.

En outre, en fonction de l'origine de l'air apporté au conduit 7, la pression maximale d'alimentation du démarreur peut varier dans un rapport de 3 à 1 et les taux de montée en pression varient dans le même rapport.

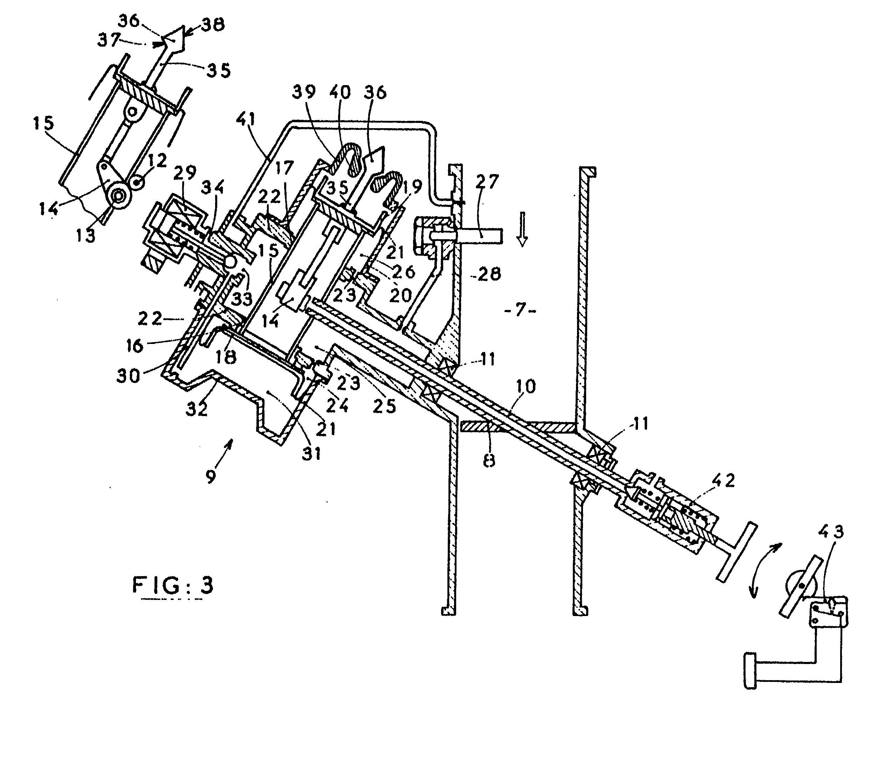

L'invention qui concerne le dispositif de commande 9 est représentée à la figure 3, la vanne papillon 8 est portée par un axe 10 tubulaire monté tournant sur des roulements 11, et dont une extrémité comporte une roue dentée 12 coopérant avec un engrenage 13 porté par une biellette 14. Ladite biellette est entraînée en rotation lors du déplacement en translation d'un tiroir 15 coulissant dans deux alésages 16, 17 de deux cloisons supports 22.

Le tiroir 15 comporte deux pistons 18 et 19, le premier 18 étant de plus grande section que le second 19, les deux pistons coulissant dans l'enveloppe du dispositif 9, formant cylindre 20, et ayant leur étanchéité assurée par rapport au cylindre par deux membranes 21 souples du type "doigt de gant".

Les deux cloisons 22 sont percées d'orifices 23 de telle sorte que la chambre 24 définie entre le premier piston et la cloison 22 soit en communication avec la chambre centrale 25 réalisée entre les deux cloisons 22 et avec la chambre 26 réalisée entre la seconde cloison 22 et le second piston 19.

La chambre centrale 25 et donc également les chambres 24 et 26 sont mises en pression par un prélèvement d'air dans la tubulure 7 au moyen d'une écope 27 et d'un tuyau de liaison 28 équipé d'une restriction.

Un électrorobinet 29 à deux positions permet dans sa première position (telle que représentée sur la figure 3) de mettre en communication par un ajutage 30 la chambre centrale 25 et la chambre de commande 31 formée entre le premier piston 18 et le fond 32 du cylindre. Dans une deuxième position de l'électrorobinet, l'orifice 33 de l'ajutage 30 est fermé et la chambre 31 est mise en communication avec la pression atmosphérique par une ouverture de section restreinte 34. Un conduit 41 de prélèvement d'air dans la tubulure 7 est représenté mais sa fonction de réchauffage de la tige de l'électrorobinet 29 est sans effet sur l'invention.

Le second piston 19 porte sur sa partie externe, une tige 35 comportant une excroissance 36 possédant une double portée tronconique 37, 38 qui coopère avec un dispositif élastique formé par une membrane 39 supportée par le cylindre 20, la membrane 39 possédant une lèvre interne toroïdale 40 venant enserrer l'excroissance 36.

Dans une variante de réalisation la membrane circulaire 39 (et sa lèvre 40) peut être remplacée par un ensemble de lames métalliques élastiques recourbées, régulièrement réparties sur le pourtour du cylindre 20. Dans un autre mode de réalisation, ce dispositif de retenue élastique 36, 39, 40 peut être remplacé par un aimant solidaire du cylindre 20 et coopérant avec une partie métallique du second piston 19.

La tige 35 et le dispositif de retenue élastique 36, 39, 40 tels qu'ils sont disposés sont à la pression atmosphérique.

Le fonctionnement du dispositif de commande 9 est le suivant, en regard des figures 3 et 4.

Au départ, le tiroir 15 est dans la position représentée sur la figure, son verrou 36 étant bloqué par la lèvre 40 du moyen de retenue 39.

La chambre centrale 25, 26, 24 est mise en pression au moyen de l'écope 27 par prélèvement d'air dans la tubulure 7 alimentée par le générateur auxiliaire 4. L'électrorobinet 29 étant dans la position représentée sur la figure, l'ajutage 33 est ouvert et la chambre de commande 31 est mise en pression par le conduit 30 de telle sorte que le tiroir 15 est en appui sur la cloison 22.

Pour ouvrir la vanne-papillon 8, on doit déplacer le tiroir 15 et, pour ce faire, on actionne l'électrorobinet 29 qui vient fermer l'ajutage 33 et mettre en communication la chambre 31 avec la pression atmosphérique par le conduit 30 et la restriction 34. La pression dans la chambre 31 diminue pendant un temps T'1 et le tiroir tend vers un déséquilibre qui devrait amener son déplacement en translation, ce qui ne peut se produire tant que la force créée sur le piston 19 par la différence des pressions $\Delta P$ en-tre les chambres 24, 25, 26 et 31 n'est pas supérieure à la force de retenue créée par le dispositif de verrouillage 36, 40, et se produit à un niveau $\Delta Pl$ supérieur au niveau $\Delta Po$ qui serait nécessaire au déplacement du tiroir en l'absence du verrou 36, 40.

Lorsque le niveau $\Delta Pl$ est atteint, le verrou 36, 40 se libère et le tiroir se déplace brutalement vers le bas pendant un temps T'2 jusqu'à ce que la recompression de la chambre 31 soit atteinte. Ladite chambre 31 étant toujours mise à la fuite, le tiroir continue à se déplacer mais sa vitesse de déplacement est limitée par la faible variation de pression dans la chambre de commande 31 autorisée par la restriction 34.

Au niveau de la vanne-papillon 8, les déplacements du tiroir 15 se traduisent par un début d'ouverture rapide de la vanne pendant le temps T'2, puis une ouverture ralentie jusqu'à la position finale où la pression maximale d'alimentation du démarreur est atteinte.

Le dispositif tel que décrit ici permet de créer une vitesse relativement élevée d'augmentation de pression en début d'ouverture, nécessaire au bon fonctionnement d'un démarreur à embrayage à inertie et toujours acceptable pour un démarreur à embrayage à roue libre avec un moteur arrêté ou presque, tout en contrôlant la vitesse finale de montée en pression nécessaire au bon fonctionnement d'un démarreur à roue libre avec un moteur en autorotation.

De plus, grâce au "saut de recompression" effectué par le tiroir, la même vitesse d'augmentation de pression en début d'ouverture est obtenue quelle que soit la pression d'alimentation en air, Pmini ou Pmaxi.

Le dispositif ici décrit peut être complété par une commande manuelle de secours en cas de blocage de l'électrorobinet 29. Cette commande de secours est constituée par un robinet 42 qui fonctionne en deux temps : on le tire pour décharger le tiroir de commande de tout l'air comprimé qu'il contient, l'air venant de l'écope 27 étant freiné par la restriction formée en extrémité du tube 28, puis on tourne le robinet 42, ce qui entraîne la vanne 8 et le tiroir 15. Le détecteur 43 représenté sur la figure sert à vérifier la position du robinet manuel 42.

Le dispositif selon l'invention permet de façon très avantageuse d'avoir un seul dispositif de commande avec un seul réglage utilisable indifféremment sur ces deux types de démarreurs de turboréacteurs, ce qui n'était pas possible jusqu'à ce jour.

**Revendications**

1. Dispositif de commande d'une vanne-papillon (8) de démarrage d'une turbomachine d'aviation, la vanne-papillon étant portée par un axe (10) dont la rotation est commandée par la translation d'un tiroir de commande (15) se déplaçant dans un cylindre sous l'action d'une différence de pression entre au moins deux chambres du cylindre, caractérisé en ce qu'il comporte un dispositif élastique de retenue (36, 39, 40) momentanée du tiroir (15) pour en empêcher le déplacement tant qu'une différence de pression minimale prédéterminée ne s'est pas créée entre les deux chambres (31, 25), le tiroir se déplaçant à grande vitesse dès que la différence de pression minimale est atteinte et pendant la durée (T'2) de la recompression de la chambre (31) en dépression, et en ce qu'il comporte en combinaison un moyen (34) pour limiter la vitesse de déplacement du tiroir après que la recompression ait eu lieu.

2. Dispositif de commande selon la revendication 1, caractérisé en ce que le tiroir de commande comporte à une de ses extrémités un premier piston (18) de grande section définissant avec le fond du cylindre une chambre de commande (31) et à son autre extrémité un second piston (19) de plus faible diamètre définissant avec le premier piston et le cylindre une chambre centrale (25) alimentée en air par une écope (27) disposée sur le circuit (7) d'alimentation en air comprimé de la vanne et en ce que la chambre de commande (31) peut être mise en communication par un électrorobinet (29), soit avec la chambre centrale (25) pour sa mise en pression initiale, soit avec la pression atmosphérique pour sa mise en dépression.

3. Dispositif de commande selon la revendication 2 caractérisé en ce que le moyen pour limiter la vitesse de déplacement du tiroir (15) est constitué par une restriction (34) disposée sur la communication de la chambre de commande avec la pression atmosphérique.

4. Dispositif de commande selon une quelconque des revendications 1 à 3 caractérisé en ce que le dispositif élastique de retenue momentanée du tiroir est constitué par une tige externe (35), solidaire du tiroir (15), comportant une excroissance (36) à deux portées tronconiques (37, 38) coopérant avec un élément élastique (39, 40) porté par le support fixe du cylindre.

5. Dispositif de commande selon la revendication 4 caractérisé en ce que l'élément élastique est constitué par un soufflet (39) solidaire du cylindre et comportant une lèvre intérieure (40) toroïdale coopérant avec une (37) des portées tronconiqes de la tige externe (35) pour la retenir dans son mouvement de translation.

6. Dispositif de commande selon la revendication 4 caractérisé en ce que l'élément élastique est constitué par un ensemble de lames métalliques élastiques recourbées, régulièrement réparties sur le pourtour du cylindre et coopérant avec la portée tronconique (37) de la tige externe du tiroir.

7. Dispositif de commande selon l'une quelconque des revendications 1 à 3 caractérisé en ce que au dispositif élastique de retenue momentanée du tiroir substitué un dispositif de retenu momentanée du tiroir, constitué par un aimant solidaire du support du cylindre et coopérant avec une partie métallique du tiroir (15).

**Patentansprüche**

1. Steuervorrichtung für das Startventil eines Turboflugtriebwerks, bei der das Ventil von einer Welle (10) getragen ist, die durch die Translationsbewegung eines Steuerschiebers (15) drehbar ist, der in einem Zylinder durch die Wirkung einer zwischen wenigstens zwei Kammern des Zylinders herrschenden Druckdifferenz bewegbar ist, dadurch gekennzeichnet, daß eine elastische Haltevorrichtung (36, 39, 40) zum vorübergehenden Halten des Steuerschiebers (15) vorgesehen ist, die dessen Verschiebung solange verhindert, bis sich zwischen den beiden Kammern (31, 25) eine vorbestimmte Mindestdruckdifferenz ausgebildet hat, wobei der Steuerschieber sich bei Erreichen dieser Mindestdruckdifferenz während der Zeitspanne (T'2) mit großer Geschwindigkeit bewegt, in der in derjenigen (31) der beiden Kammern, in der niedriger Druck herrscht, der Druck wieder aufgebaut wird, und daß in Kombination hiermit ein Mittel (34) zur Begrenzung der Bewegungsgeschwindigkeit des Steuerschiebers nach dem Wiederaufbau des Drucks vorgesehen ist.

2. Steuervorrichtung nach Anspruch 1, dadurch gekennzeichnet, daß der Steuerschieber an einem seiner Enden einen ersten Kolben (18) mit großem Querschnitt aufweist, der mit dem Boden des Zylinders eine Steuerkammer (31) begrenzt, und an seinem anderen Ende einen zweiten Kolben (19) mit kleinerer Durchmesser, der mit dem ersten Kolben und dem Zylinder eine zentrale Kammer (25) begrenzt, die durch eine in dem Druckluftspeisekreis (7) des Ventils (8) angeordnete Schöpfvorrichtung (27) mit Luft gespeist wird, und daß die Steuerkammer (31) über einen Elektroschieber (29) entweder mit der zentralen Kammer (25) verbunden und dadurch auf einen Anfangsdruck oder mit atmosphärischen Druck verbunden und dadurch auf niedrigen Druck gebracht werden kann.

3. Steuervorrichtung nach Anspruch 2, dadurch gekennzeichnet, daß das Mittel zur Begrenzung der Bewegungsgeschwindigkeit des Steuerschiebers (15) aus einer Verengung (24) besteht, die in der Verbindung zwischen der Steuerkammer mit dem atmosphärischen Druck angeordnet ist.

4. Steuervorrichtung nach einem der Ansprüche 1 bis 3, dadurch gekennzeichnet, daß die elastische Haltevorrichtung zum vorübergehenden Halten des Steuerschiebers aus einer mit dem Steuerschieber (15) fest verbundenen externen Stange (35) besteht, die eine Erweiterung mit zwei kegelstumpfförmigen Tragflächen (37, 38) besitzt, die mit einem von der festen Halterung des Zylinders getragenen elastischen Element (39, 40) zusammenwirken.

5. Steuervorrichtung nach Anspruch 4, dadurch gekennzeichnet, daß das elastische Element aus einem mit dem Zylinder fest verbundenen Balgen (39) besteht, der eine torusförmige innere Lippe besitzt, die mit einer (37) der beiden kegelstumpfförmigen Tragflächen der externen Stange (35) zusammenwirkt, um diese bei ihrer Translationsbewegung zu halten.

6. Steuervorrichtung nach Anspruch 4, dadurch gekennzeichnet, daß das elastische Element aus einer Anordnung von gebogenen elastischen Metallamellen besteht, die am Umfang des Zylinders regelmäßig verteilt sind und mit der kegelstumpfförmigen Tragfläche (37) der externen Stange des Steuerschiebers zusammenwirken.

7. Steuervorrichtung nach einem der Ansprüche 1 bis 3, dadurch gekennzeichnet, daß die elastische Haltevorrichtung zum vorübergehenden Halten des Steuerschiebers durch eine solche substituiert ist, die aus einem Magneten besteht, der mit der Halterung des Zylinders fest verbunden ist und mit einem metallischen Teil des Steuerschiebers (15) zusammenwirkt.

**Claims**

1. A control device for the butterfly valve (8) used in the starting of an aircraft gas turbine, the butterfly valve being carried on a shaft (10) whose rotation is controlled by the movement of a control slide (15) moving in a cylinder under the action of a pressure differential between at least two chambers in the cylinder, characterised in that it comprises an elastic device (36, 39, 40) momentarily to restrain the slide (15) so as to prevent its movement until a minimum predetermined pressure differential is created in the two chambers (31, 25), the slide then moving at high speed as soon as the minimum difference in pressure has been reached and during the time (T'2) of repressurising of the chamber (31) which was at lower pressure, and in that it comprises in combination, a means (34) of limiting the speed of displacement of the slide after repressurisation has taken place.

2. A control device in accordance with Claim 1, characterised in that the control slide comprises at one of its ends a first piston (18) of large diameter defining with the base of the cylinder a control chamber (31) and at its other end a second piston (19) of smaller diameter defining with the first piston and the cylinder a central chamber (25) supplied with air by a scoop (27) fitted in the compressed air supply pipe (7) to the butterfly valve and in that the control chamber (31) can be made to communicate, by a solenoid valve (29), with either the central chamber (25) to put it under initial pressure, or with the atmosphere to depressuise it.

3. A control device in accordance with Claim 2 characterised in that the means of limiting the speed of movement of the slide (15) is constituted by a choke (34) placed in the air passage linking the control chamber with the atmosphere.

4. A control device in accordance with any of the Claims 1 to 3 characterised in that the elastic device momentarily restraining the slide consists of an external rod (35) fixed to the slide (15), comprising a bulbous portion (36) with two conical shoulders (37, 38) working with an elastic element (39, 40) mounted on the fixed cylinder support.

5. A control device in accordance with Claim 4 characterised in that the elastic element is constituted by a bellows (39) fixed to the cylinder and comprising an inner circular lip (40) working in conjunction with one (37) of the conical shoulders of the external rod (35) to restrain this in its axial movement.

6. A control device in accordance with Claim 4 characterised in that the elastic element is constituted by an assembly of incurved elastic metallic strips uniformly spaced around the circumference of the cylinder and working in conjunction with the conical shoulder (37) of the external rod of the slide.

7. A control device in accordance with any of the Claims 1 to 33 characterised in that in place of the elastic element for momentarily restraining the slide there may be substituted a device momentarily to restrain the slide consisting of a magnet fixed to the cylinder support and working in conjunction with a metal part of the slide (15).

FIG:1

EP 0 270 443 B1

FIG : 2

FIG : 4

FIG: 3

EP 0 270 443 B1